## Europäisches Patentamt

## European Patent Office

## Office européen des brevets

(19)

(11) Publication number: **0 153 563**
**B1**

(12)

# EUROPEAN PATENT SPECIFICATION

(45) Date of publication of patent specification: **31.05.89**

(51) Int. Cl.⁴: **B 23 K 9/32**

(21) Application number: **85100305.3**

(22) Date of filing: **14.01.85**

(54) **Mechanical tube plug removal tool.**

(30) Priority: **29.02.84 US 584703**

(43) Date of publication of application:
**04.09.85 Bulletin 85/36**

(45) Publication of the grant of the patent:
**31.05.89 Bulletin 89/22**

(84) Designated Contracting States:
**BE FR SE**

(56) References cited:
**DE-A-2 251 599**
**GB-A-1 141 970**
**US-A-4 262 187**
**US-A-4 369 569**

(73) Proprietor: **COMBUSTION ENGINEERING, INC.**
**1000 Prospect Hill Road Box 500**
**Windsor Connecticut 06095-0500 (US)**

(72) Inventor: **Savor, Dennis Edward**
**5447 Crestview Drive**
**Hixson Tennessee 37343 (US)**

(74) Representative: **Gross, Gernot K.**
**Kleiberweg 5**
**D-6200 Wiesbaden (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### BACKGROUND OF THE INVENTION

In tube-and-sheet heat exchangers, for example those used in a nuclear steam generator, problems are encountered in the form of tubes which become defective or damaged. In the past, these tubes were removed from operation by welding plugs into each end during a maintenance shutdown, and thereafter continuing the later operation of the steam generator with reduced capacity with the remaining tubes in operation. This is disclosed in my earlier U.S. Patent 4,262,187 which issued on April 14, 1981. This form of maintenance is satisfactory until so many of the tubes are plugged as to make it economically unfeasible to continue operation at the reduced capacity.

It is presently contemplated that instead of doing the above, the tubes would be plugged by plugs that can be removed at a later time. These plugs would be mechanically expanded into the tubes without any welding being done. Thus when too many tubes have been removed from operation, the unit can be shut down, the plugs can be removed, and the tubes can be inspected and tested to see which defective tubes can be effectively repaired, for example by sleeving. If enough tubes can be repaired, the useful life of the steam generator can be greatly extended. In order to permit this type of operation, however, it must be possible to economically remove the plugs from the tubes without causing damage to the tubes.

It is known in GB-A-1 141 970 to make an annular weld in a heat exchanger tube plate or tube bore using apparatus comprising a nonconsumable electric welding electrode tip, means for axially positioning the electrode tip in the bore interior at a first axial position within the plug, means 14 for axially moving, for adjustment purposes, the electrode tip to a second axial position where an annular weld is desired, means for rotatably moving the electrode tip to make the annular weld, and means for energizing the electrode weld, and means for energizing the electrode tip during rotation to make the desired annular weld. Other known welding devices used in heat exchangers are shown in US-A-4 369 569, DE-A-2 251 599 and US-A-4 262 187, mentioned above.

### SUMMARY OF THE INVENTION

The present invention is directed to a method and an apparatus according to claim 1 and 2 respectively, for removing plugs from tubes without causing damage to the tubes. This is accomplished in accordance with the invention by means of a tool which spirals an electric arc along the inside surface of the plug wall. As the arc melts a portion of the plug along its inside surface, the forces of solidification cause the wall of the plug to contract or shrink back to the original size it was before it was expanded into the defective tube. After the plug has been shrunk, it can be easily removed by grippers which grip the inner surface of the plug.

### BRIEF DESCRIPTION OF THE DRAWINGS

Figure 1 is a schematic, partial elevational view, partly in section, of a tube plug removal tool constructed in accordance with the invention;

Figure 2 is an enlarged view taken on line 2-2 of Fig. 1;

Figure 3 is a view taken on line 3-3 of Fig. 2; and

Figure 4 is a view taken on line 4-4 of Fig. 2.

### DESCRIPTION OF THE PREFERRED EMBODIMENT

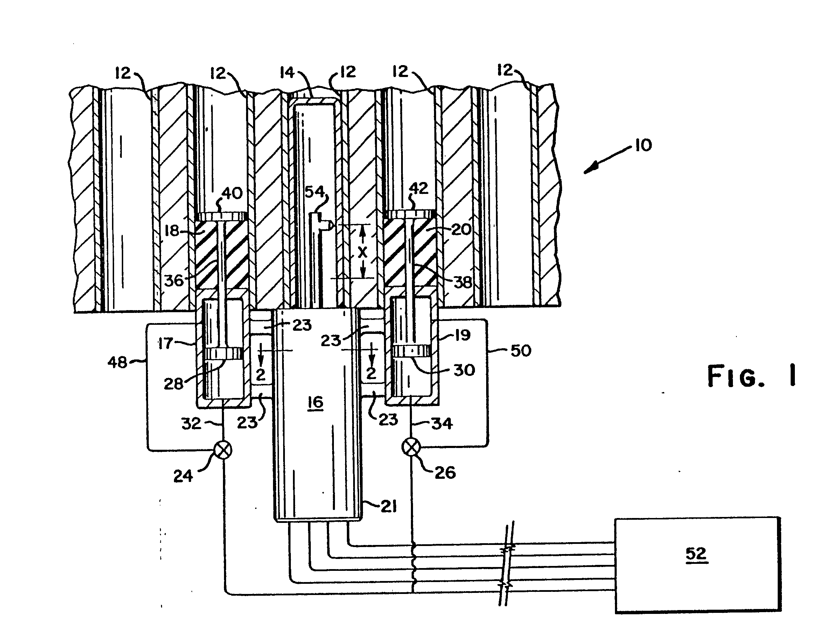

Looking now to Figure 1, a tube sheet 10 of a nuclear steam generator is partially shown, which has a plurality of tubes 12 secured thereto. One of the tubes 12 has a plug 14 therein, which had been placed in the tube to effectively remove it from operation, as mentioned above. The plug had been mechanically expanded into the tube throughout a longitudinal portion thereof designated X in the figure.

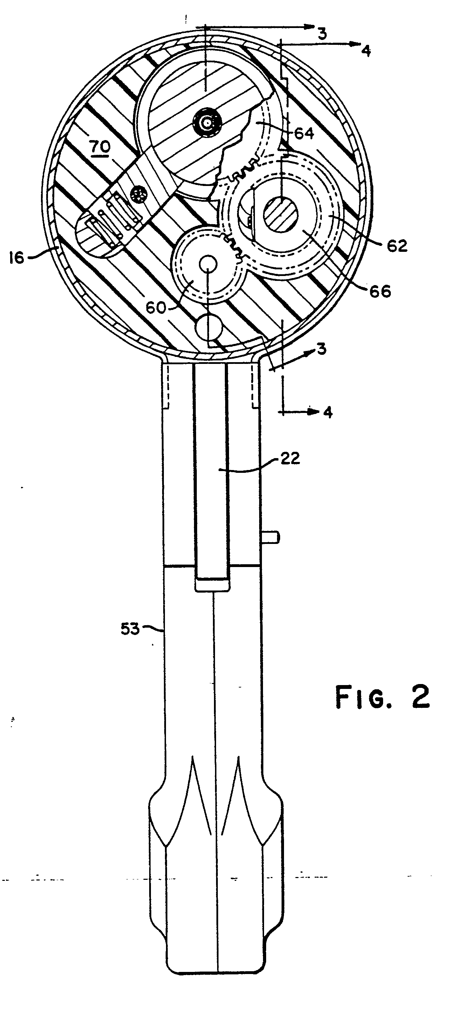

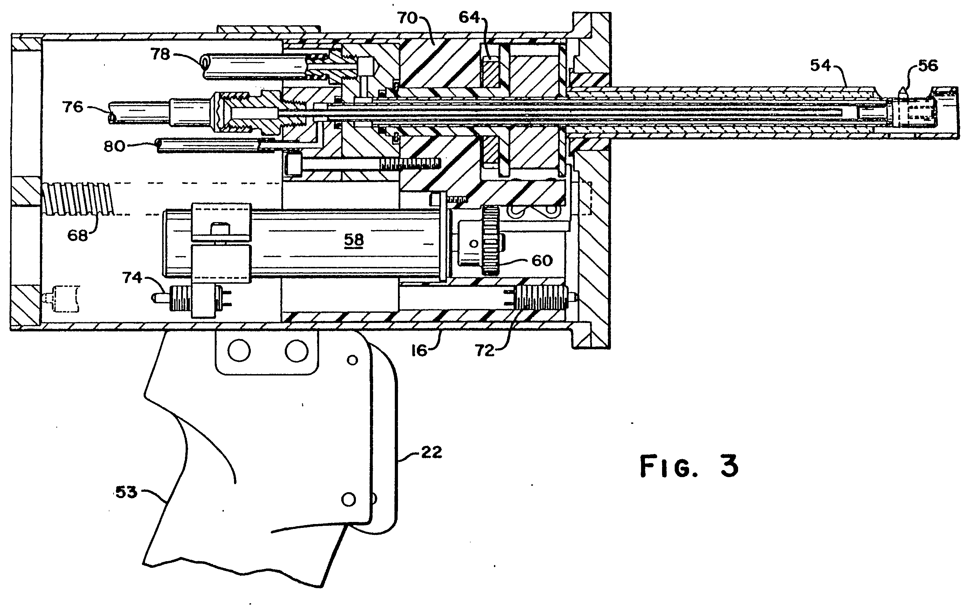

The tool 16 of the present invention for removing the plug 14, is shown in operative position. A pair of expandable elastomer grippers 18, 20 hold the tool in its operative position adjacent to the bottom of the tube sheet 10. Cylinders 17, 19 are attached to the main tool body 21 by brackets 23. These grippers are actuated by a trigger 22 (Figs. 2 and 3), which electrically actuate 4-way valves 24, 26 (Fig. 1), controlling the flow of air to the pistons 28, 30. When air is allowed to flow to the rearward side of pistons 28, 30 through lines 32, 34, rods 36, 38 and attached members 40, 42 move upwardly, causing relaxation of the elastomers 18, 20. When air is supplied to the forward side of pistons 28, 30 through lines 48, 50, the rods 36, 38 and attached members 40, 42 move downwardly, compressing the elastomers into tight engagement with the inner walls of the tubes 12. Valves 24, 26 are 4-way valves which allow pressurized fluid to flow to one side of the pistons, while the other sides are vented to the atmosphere, and vice versa. Although the preferred grippers are as shown, any suitable means for holding the tool in place can be used.

Extending from the rear of the tool 16 are a plurality of wires and conduits which supply the tool with electrical power, inert gas, and cooling water from the control panel 52 which can be removed some distance from the tool 16.

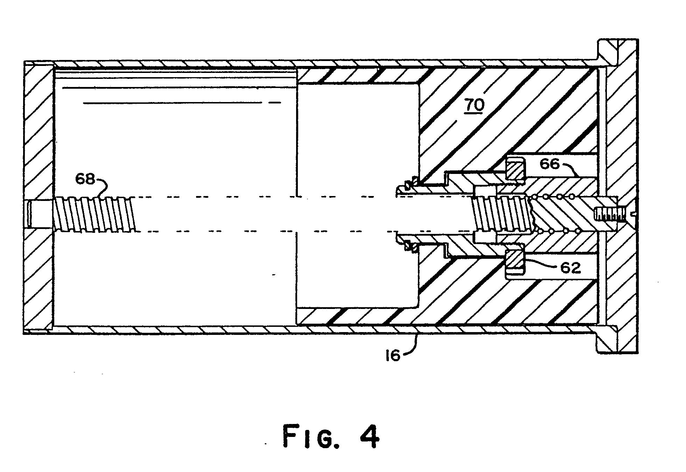

Looking now to Figs. 2-4, the tool 16 is shown in more detail. The tool contains a handle 53, by means of which an operator can grip and manipulate the tool. The tool contains a nonconsumable electric welding electrode 54 having a tungsten tip 56 adjacent its end. The electrode and its tungsten tip are capable of being rotated while being moved longitudinally so that it can be used to melt the inner surface of the plug 14 along a spiral path.

A reversible motor 58 is mounted within the tool housing 16 which drives a pinion gear 60. Gear 60 is in mesh with drive gear 62 which is also in mesh with the torch drive gear 64. As the pinion gear 60 turns, it also drives gear 62 which is attached to a ball nut 66. The screw 68 is stationary, and as gear 62 turns the ball nut 66, a linear movement is transmitted to the carriage 70 which houses the rear end of the welding electrode 54. The ball nut gear 62 and the torch or electrode gear 64 are a one-to-one ratio so that one revolution of the ball nut makes the torch or electrode move one revolution also. This is done so that there can be a uniform pitch established to the spiraling arc of the torch or electrode tip, which tip moves longitudinally approximately 1/8″ per revolution.

A forward limit switch 72 limits the torch and carriage movement in the direction carrying the electrode 54 into the plug. When the plug heating and shrinking operation is initiated, the torch or electrode spirals rearwardly, or out of the plug, until a second limit switch 74 is actuated. Both limit switches stop the motor 58, and in addition, limit switch 74 stops the supply of power to the tungsten tip thus stopping the heating process of the plug 14. The tungsten tip is suitably wired so that an arc is struck between the tip and the inner surface of the plug as the tip spirals rearwardly out of the plug during the heating or shrinking operation.

Inert gas is introduced into the plug interior during the heating process through channel 78. Cooling water is introduced to the tool through passage 76, and exits by way of passage 80.

The operation of the tool will now be described. An operator initially positions the tool such that the electrode is located within the plug 14 that it is desired to remove. The grippers are at this time positioned in two of the adjacent tubes 12. The elastomeric members are then compressed into tight engagement with the inner walls of the tubes when the operator actuates trigger 22. He then notifies another operator back at the panel 52 that the tool is in place and the heat shrinking operation can commence. Inerting gas and cooling water are at this time passed to the tool. The motor 58 is actuated by the operator to move the welding electrode to a first position fully extended into the plug. Limit switch 72 stops the motor 58 when this position is reached. The motor 58 is again energized by the operator, only this time in the reverse direction, so that the electrode is rotatably withdrawn from the plug. Simultaneously, the electrode is energized so that an arc is struck between the electrode tip and the inner wall of the plug. The arc travels along a spiral path as the electrode rotatably moves out of the plug, melting the metal on the inner surface of the plug along this path. This causes heat shrinkage of the plug back to the approximate size it was before it was expanded into tight sealing engagement inside the tube. After shrinking, the plug will either drop out of the tube of its own volition due to gravity, or it can be easily removed by a suitable gripping tool. Care must be taken to control the voltage to the electrode so that the plug is only melted on its inner surface. If melt- through of the plug wall occurs, the plug could be welded into the tube and would be extremely difficult to remove thereafter. When the electrode has moved to its second position so that the second limit switch 74 is contacted, it shuts off the power supply to the electrode and also stops motor 58. At this time, the cooling water and inserting gas can be shut off by the operator and the plug shrinking operation has been completed.

**Claims**

1. The method of removing a hollow plug (14) from a tube (12), which plug has been mechanically expanded into such tube, characterized by inserting a nonconsumable electric welding electrode (54) into the plug, withdrawing the electrode while rotating it, and simultaneously supplying electrical power to the electrode so that an arc is struck between the tip of the electrode and the inner surface of the plug to thereby melt the inner surface of the plug along a spiral path while the electrode is being withdrawn, to thereby cause the plug to heat shrink back to the approximate size it was before it was expanded into the tube.

2. Apparatus for removing a hollow plug (14) from a tube (12), which plug has been expanded into tight engagement with the tube, said apparatus comprising a nonconsumable electric welding electrode tip (56), means (66, 68) for axially positioning the electrode tip in the hollow plug interior at a first axial position within the plug, means (66, 68) for axially moving the electrode tip to a second axial position, means (60, 62, 64) for rotatably moving the electrode tip, and means for energizing the electrode tip (56), characterized in that the means (66, 68) for axially moving the electrode tip to a second axial position and the means (60, 62, 64) for rotatably moving the electrode are combined to move the electrode tip from said first axial position to said second axial position along a spiral path and said means for energizing the electrode tip (56) strikes a continuous arc during said movement along the spiral path thus melting the metal on the interior surface of the plug (14) and heat shrinking the plug back to approximately its original size prior to its being expanded into the tube.

3. The apparatus set forth in Claim 2, further characterized by limit switches (72, 74) for accurately determining the first and second positions of the electrode.

4. The apparatus set forth in Claim 2, further characterized by means (78) for introducing inert gas to the plug interior during the heat shrinking operation.

5. The apparatus set forth in Claim 4, further characterized by means (76, 80) for cooling the electrode during the heat shrinking operation.

**Patentansprüche**

1. Verfahren zur Entfernung eines hohlen Stopfens (14) aus einem Rohr (12), der mechanisch in ein solches Rohr eingewalzt wurde, gekennzeichnet durch das Einsetzen einer sich nichtverzehrenden elektrischen Schweißelektrode (54) in den Stopfen, Herausziehen der Elektrode unter Drehung und gleichzeitige Zufuhr elektrischen Stroms an die Elektrode, so daß zwischen der Elektrodenspitze und der Innenfläche des Stopfens ein Lichtbogen gezündet wird, um so die Innenfläche des Stopfens während des Herausziehens der Elektrode entlang eines Spiralweges zu schmelzen, damit der Stopfen auf ungefähr seine ursprüngliche Größe vor der Einwalzen in das Rohr zurück heißgeschrumpft wird.

2. Vorrichtung zum Entfernen eines hohlen Stopfens (14) aus einem Rohr (12), der in dichtenden Eingriff mit der Rohr gewalzt wurde, wobei die Vorrichtung aus einer sich nichtverzehrenden elektrischen Schweißelektrodenspitze (56), Mitteln (66, 68) zur axialen positionierung der Elektrodenspitze im Inneren des hohlen Stopfens in eine erste axiale Stellung darin, Mitteln (66, 68) zur axialen Bewegung der Elektrodenspitze in eine zweite axiale Stellung, Mitteln (60, 62, 64) zur drehenden Bewegung der Elektrodenspitze und Mitteln zum Erregen der Elektrodenspitze (56) besteht, dadurch gekennzeichnet, daß die Mittel (66, 68) zur axialen Bewegung der Elektrodenspitze in eine zweite axiale Stellung und die Mittel (60, 62, 64) zur drehenden Bewegung der Elektrode kombiniert sind, um die Elektrodenspitze aus jener ersten axialen Stellung entlang eines Spiralweges in jene zweite axiale Stellung zu bewegen und besagte Mittel zum Erregen der Elektrodenspitze (56) während dieser Bewegung entlang des Spiralweges einen kontinuierlichen Lichtbogen zünden, wodurch das Metall auf der Innenfläche des Stopfens (14) schmilzt und der Stopfen auf ungefähr seine ursprüngliche Größe vor der Einwalzen in das Rohr zurück heißgeschrumpft wird.

3. Vorrichtung nach Anspruch 2, ferner gekennzeichnet durch Endschalter (72, 74) zur genauen Bestimmung der ersten und zweiten Stellungen der Elektrode.

4. Vorrichtung nach Anspruch 2, ferner gekennzeichnet durch Mittel (78) zur Einführung von Inertgas in das Innere des Stopfens während des Heißschrumpfvorgangs.

5. Vorrichtung nach Anspruch 4, ferner gekennzeichnet durch Mittel (76, 80) zum Kühlen der Elektrode während des Heißschrumpfvorgangs.

**Revendications**

1. Procédé pour enlever un bouchon creux (14) d'un tube (12), bouchon qui a été expansé mécaniquement à l'intérieur dudit tube, caractérisé en ce que l'on introduit une électrode de soudage électrique non consommable (54) dans le bouchon, en ce que l'on retire l'électrode tout en la faisant tourner, et en ce que simultanément on alimente l'électrode en courant électrique de telle sorte qu'un arc jaillit entre la pointe de l'électrode et la surface intérieure du bouchon afin de faire fondre ainsi la surface intérieure du bouchon le long d'une trajectoire en spirale pendant que l'on retire l'électrode, pour amener le bouchon à revenir par retrait thermique à la dimension qu'il avait avant d'être expansé dans le tube.

2. Dispositif pour enlever un bouchon creux (14) d'un tube (12), bouchon qui a été expansé en contact étanche avec le tube, ledit dispositif comprenant une pointe (56) d'électrode de soudage électrique non consommable, des moyens (66, 68) pour positionner axialement la pointe de l'électrode à l'intérieur du bouchon creux en une première position axiale à l'intérieur du bouchon, des moyens (66, 68) pour déplacer axialement la pointe de l'électrode jusqu'à une seconde position axiale, des moyens (60, 62, 64) pour déplacer en rotation la pointe de l'électrode, et des moyens pour activer la pointe (56) de l'électrode, caractérisé en ce que les moyens (66, 68) pour déplacer axialement la pointe de l'électrode jusqu'à une seconde position axiale et les moyens (60, 62, 64) pour mouvoir l'électrode en rotation sont combinés pour déplacer la pointe de l'électrode depuis ladite première position axiale jusqu'à ladite seconde position axiale le long d'une trajectoire en spirale et en ce que lesdits moyens pour activer la pointe (56) de l'électrode produisent un arc continu pendant ledit mouvement le long de la trajectoire en spirale, faisant ainsi fondre le métal sur la surface intérieure du bouchon (14) et provoquant le retrait thermique du bouchon approximativement jusqu'à la dimension originale qu'il avait avant son expansion dans le tube.

3. Dispositif suivant la revendication 2, caractérisé en outre par des interrupteurs de limitation (72, 74) pour déterminer avec précision les première et seconde positions de l'électrode.

4. Dispositif suivant la revendication 2, caractérisé en outre par des moyens (78) pour introduire un gaz inerte à l'intérieur du bouchon pendant l'opération de retrait thermique.

5. Dispositif suivant la revendication 4, caractérisé en outre par des moyens (76, 80) pour refroidir l'électrode pendant l'opération de retrait thermique.

FIG. 1

FIG. 2

FIG. 3

FIG. 4